# EUROPÄISCHE PATENTANMELDUNG

(11) **EP 1 672 769 A2**
(43) Veröffentlichungstag der Anmeldung: **21.06.2006**
(21) Anmeldenummer: 05025327.7
(22) Anmeldetag: 21.11.2005
(51) Int. Cl.: H02K 11/00

(54) **Betätigungsvorrichtung für Kraftfahrzeugkomponenten**

(30) Priorität: 18.12.2004 DE 102004061018
(71) Anmelder: LuK Lamellen und Kupplungsbau Beteiligungs KG, 77815 Bühl (DE)
(72) Erfinder: Hill, Wolfgang, 76135 Karlsruhe (DE)

(57) **Zusammenfassung**

Die Erfindung betrifft eine Vorrichtung zum Betätigen von Komponenten eines Kraftfahrzeugs mit wenigstens zwei Elektromotoren, welche wenigstens eine Statoreinheit und eine Rotoreinheit aufweisen, und einer Steuerungseinrichtung für die Elektromotoren, welche wenigstens eine Logikeinrichtung und eine Leistungseinrichtung aufweist. Dabei ist die Steuerungseinrichtung fest mit wenigstens einer Komponente beider Elektromotoren verbunden.

## Beschreibung

Die vorliegende Erfindung betrifft eine Betätigungsvorrichtung für Komponenten, insbesondere für Komponenten eines Kraftfahrzeugs. Aus dem Stand der Technik ist es bekannt, diverse Kraftfahrzeugkomponenten mittels Elektromotoren zu betätigen bzw. zu steuern, wie beispielsweise Schaltgetriebe oder Nockenwellenverstellsysteme und dergleichen. Unter dem Begriff Schaltgetriebe sind automatisierte Getriebe zusammengefasst, die auf das Handschaltgetriebe (HSG) aufbauen und im Wesentlichen ähnliche Technologien nutzen. Dazu gehören das elektronische Kupplungsmanagement (EKM), das automatisierte Schaltgetriebe (ASG), das unterbrechungsfreie Schaltgetriebe (USG), das Parallelschaltgetriebe (PSG) und das elektrische Schaltgetriebe (ESG).

Derartige Betätigungsvorrichtungen weisen im Stand der Technik einen oder mehrere Elektromotoren zur Betätigung der betreffenden Komponenten auf.

Dabei werden im Stand der Technik teilweise so genannte EC-Motoren eingesetzt (Electronically Commuted). Diese Motoren weisen einen Stator auf, innerhalb dessen sich ein Rotor dreht. Ferner weisen diese Motoren eine Steuerungseinrichtung auf, welche eine Logikeinrichtung aufweist sowie eine Leistungseinrichtung. Die Logikeinrichtung dient dazu, die Drehung des Rotors innerhalb des Stators zu steuern. Die Leistungseinrichtung stellt die Leistungsversorgung sicher.

Nach dem Stand der Technik ist es bekannt, mehrere, beispielsweise vier, Elektromotoren über eine zentrale Steuerungseinrichtung bzw. eine zentrale Logikeinrichtung anzusteuern.

Für diese Ansteuerung ist es erforderlich, zwischen der zentralen Logikeinrichtung und den einzelnen Motoren Kabelverbindungen vorzusehen. Diese Kabelverbindungen weisen eine Vielzahl von Steckverbindungen auf, welche generell Unsicherheitsfaktoren darstellen, da gerade in einem Kraftfahrzeug die gesamte Betätigungsvorrichtung permanenten Erschütterungen unterworfen ist und daher hohe Anforderungen an die Qualität der Steckverbindungen gestellt werden. Daneben erfordern die einzelnen Verbindungen eine nicht unerhebliche Menge an Bauraum. Schließlich stellen die einzelnen Komponenten, wie Kabel, Stecker, Lager und Dichtungen, zwischen einzelnen Elementen auch einen nicht unerheblichen Kostenfaktor bei der Herstellung der Betätigungsvorrichtung dar.

Der vorliegenden Erfindung liegt die Aufgabe zugrunde, eine Betätigungsvorrichtung zur Verfügung zu stellen, welche gegenüber dem Stand der Technik eine höhere Zuverlässigkeit aufweist, weniger Bauraum benötigt und in kostengünstigerer Weise hergestellt werden kann. Diese Aufgabe wird erfindungsgemäß durch den Gegenstand von Anspruch 1 erreicht. Vorteilhafte Ausführungsformen und Weiterbildungen sind Gegenstand der Unteransprüche. Es wird jedoch darauf hingewiesen, dass nicht notwendigerweise sämtliche Vorteile durch alle Weiterbildungen erreicht werden.

Die erfindungsgemäße Vorrichtung zum Betätigen von Komponenten eines Kraftfahrzeugs weist wenigstens zwei Elektromotoren auf, welche jeweils wenigstens eine Statoreinheit und eine Rotoreinheit aufweisen. Ferner weist die Vorrichtung eine Steuerungseinrichtung für die Elektromotoren auf, welche wenigstens eine Logikeinrichtung und eine Leistungseinrichtung aufweist. Dabei ist erfindungsgemäß die Steuerungseinrichtung fest mit wenigstens einer Komponente beider Elektromotoren verbunden.

Unter einer Betätigungsvorrichtung wird eine Vorrichtung verstanden, welche in definierter Weise auf die betreffende Komponente des Kraftfahrzeugs einwirkt. Bevorzugt handelt es sich um eine Vorrichtung, die in mechanischer Weise auf die entsprechende Komponente des Kraftfahrzeugs einwirkt, wie beispielsweise ein oder mehrere Elektromotoren, die in definierter Weise die Komponenten bedienen.

Unter einer Steuerungseinrichtung für die Elektromotoren wird - insbesondere, aber nicht ausschließlich - eine Einrichtung verstanden, welche im Wesentlichen die komplette Steuerung der Motoren, das heißt Regulierung der an die Motoren abgegebenen Leistung sowie die Kontrolle der jeweiligen Drehstellung der Rotoren gegenüber den Statoren, regelt.

Unter einer festen Verbindung wird verstanden, dass die Steuerungseinrichtung - im Gegensatz etwa zu einer bloßen Kabelverbindung - in fester bzw. kraftschlüssiger Verbindung mit wenigstens einer Komponente der Elektromotoren steht. Durch diese Vorgehensweise kann eine Vielzahl von Leitungen bzw. Kabeln zwischen der Steuerungseinrichtung bzw. einem Teil der Steuerungseinrichtung und den Motoren eingespart werden.

In einer bevorzugten Ausführungsform sind die Steuerungseinrichtung und wenigstens zwei Elektromotoren in einem gemeinsamen Gehäuse untergebracht. Unter einem Gehäuse wird eine Vorrichtung verstanden, welche die einzuhausenden Einrichtungen wenigstens teilweise umgibt. Dabei kann es sich um ein mechanisch gefertigtes Gehäuse handeln.

Daneben wird unter einem Gehäuse jedoch auch eine Kunststoffumspritzung zweier oder mehrerer Komponenten verstanden, welche diese Komponenten im Wesentlichen fest miteinander verbindet.

Durch die Verwendung der Gehäuse bzw. Umspritzungen kann eine besonders stabile Verbindung zwischen den einzelnen Komponenten erreicht werden.

In einer weiteren bevorzugten Ausführungsform weist die Vorrichtung eine Systemlogikeinrichtung auf, die besonders bevorzugt fest mit wenigstens einer Komponente der Elektromotoren verbunden ist. Unter einer Systemlogikeinrichtung wird eine übergeordnete Logikeinrichtung verstanden, welche bevorzugt mit den einzelnen Steuerungseinrichtungen kommuniziert. Dabei ist bevorzugt diese Systemlogikeinrichtung fest sowohl mit wenigstens einer Komponente der Elektromotoren als auch mit wenigstens einer Steuerungseinrichtung verbunden.

In einer weiteren bevorzugten Ausführungsform ist die Steuerungseinrichtung fest mit der Statoreinheit wenigstens eines Elektromotors, bevorzugt fest mit den Statoreinheiten beider Elektromotoren, verbunden. Dabei werden vorzugsweise die Statoreinheiten und die Steuerungseinrichtung zunächst miteinander verbunden und nach dieser Montage die gesamte Baugruppe gemeinsam umspritzt und/oder vergossen. Die gesamte Baugruppe bildet in diesem Fall eine Elektronikeinheit.

Insbesondere durch das zuletzt genannte Vergießen bzw. Umspritzen der einzelnen Komponenten kann erreicht werden, dass die einzelnen elektrischen Verbindungen besonders unempfindlich gegen Erschütterungen sind.

In einer weiteren bevorzugten Ausführungsform weist die Steuerungseinrichtung für jeden Elektromotor wenigstens eine Leistungseinrichtung auf. Bevorzugt handelt es sich dabei um Leistungseinrichtungen, die im Wesentlichen baugleich ausgeführt sind. Auf diese Weise wird jeder einzelne Motor von einer im Wesentlichen gleichartigen Leistungseinrichtung und damit im Wesentlichen gleichartig angesteuert. Es ist jedoch auch möglich, unterschiedliche Leistungseinrichtungen zu wählen. Dies ist dann interessant, wenn ein unterschiedliches Ansprechverhalten der einzelnen Elektromotoren gewünscht ist.

In einer weiteren bevorzugten Ausführungsform stehen die Steuerungseinrichtungen in elektrisch leitendem Kontakt mit der Systemlogikeinrichtung. Bevorzugt erfolgt die Kontaktierung zwischen den Steuerungseinrichtungen und der Systemlogikeinrichtung über flächige Kontaktstellen. Unter einer flächigen Kontaktstelle wird verstanden, dass der Kontakt über eine relativ große Fläche erfolgt. Diese flächigen Kontaktstellen können insbesondere, aber nicht ausschließlich, mit Leitklebstoff oder Lot realisiert werden. Die flächigen Kontaktstellen bieten den Vorteil, dass an jeweiligen Kontaktstellen keine übermäßig hohe Erwärmung auftritt.

In einer weiteren bevorzugten Ausführungsform sind die Logikeinrichtung und die Leistungseinrichtung, besonders bevorzugt auf einer gemeinsamen Kühleinrichtung angeordnet. Dabei handelt es sich bevorzugt um einen Kühlkörper, auf welchem die Logikeinrichtung und die Leistungseinrichtung montiert sind. Durch diese gemeinsame Anordnung kann eine gemeinsame Kühleinrichtung zur Kühlung sowohl der Leistungseinrichtung und der Logikeinrichtung, als besonders bevorzugt auch der Systemlogikeinrichtung verwendet werden. Diese Kühleinrichtung ist in einer weiteren bevorzugten Ausführungsform wannenförmig ausgebildet.

Dabei steht bevorzugt die Kühleinrichtung in direktem Kontakt mit wärmeleitenden Elementen der Logikeinrichtung. Auf diese Weise wird gewährleistet, dass die Ableitung der entstehenden Wärme in besonders effizienter Weise erfolgt, da die Wärmeableitung unmittelbar in jenem Bereich erfolgt, in dem die Wärme entsteht oder hingeleitet wird.

Bei einer weiteren bevorzugten Ausführungsform sind die Wärmequellen der Leistungseinrichtung von den Wärmequellen der Logikeinrichtung thermisch im Wesentlichen isoliert. Einzelne Bauelemente der Leistungseinrichtung können Temperaturen in Bereichen von 175°C bis 200°C erreichen und erwärmen sich damit deutlich mehr als die Bauelemente der Logikeinrichtung. Durch die thermische Isolierung bzw. thermische Trennung wird erreicht, dass keine unerwünschte Erwärmung von Bauelementen der Logikeinrichtung durch Bauelemente der Leistungseinrichtung auftritt.

In einer weiteren bevorzugten Ausführungsform weist die Systemlogikeinrichtung eine flache Gestalt auf. Unter einer flachen Gestalt wird verstanden, dass die entsprechende Einrichtung sich in zwei Ausdehnungsrichtungen in vorgegebener Weise erstreckt und sich in einer zu diesen vorgegebenen Ausdehnungsrichtungen senkrechten dritten Ausführungsrichtung dem gegenüber nur geringfügig erstreckt.

Durch die flache Gestalt der Systemlogikeinrichtung kann eine besonders Platz sparende Anordnung innerhalb der gesamten Vorrichtung geschaffen werden.

In einer weiteren bevorzugten Ausführungsform weist die Kühleinrichtung flächige Kontakte zu den Leistungseinrichtungen auf. Durch diese flächigen Kontakte kann eine besonders effiziente Wärmeabführung von den Leistungseinrichtungen zur Kühleinrichtung erreicht werden.

In einer weiteren bevorzugten Ausführungsform ist die Steuerungseinrichtung und bevorzugt auch die Systemlogikeinrichtung mit Elektromotoren über eine Verbindungseinrichtung verbunden. Dabei handelt es sich bevorzugt um ein Adapter-Verbindungsteil, das bevorzugt aus kunststoffumspritzten Stanzteilen und/oder flexiblen Leiterplatten besteht oder solche aufweist. Bevorzugt bildet dieses Adapter-Verbindungsteil gleichzeitig den Stecker zum Fahrzeug und/oder jeweils ein Motorschild der angesteuerten Elektromotoren. Durch diese Anordnung kann eine besonders effiziente Einsparung zusätzlicher Stecker und Kontakte erreicht werden. Bevorzugt sind die Außenabmessungen der Steuerungseinrichtung standardisiert. Dies hat den Vorteil, dass einzelne Steuerungseinrichtungen gegen andere ausgetauscht werden können oder auch in unterschiedlichen Betätigungsvorrichtungen, beispielsweise bei unterschiedlichen Fahrzeugtypen, zum Einsatz kommen können.

In einer weiteren bevorzugten Ausführungsform weist die Verbindungseinrichtung ein Motorschild pro Elektromotor auf. Bevorzugt sind die Motorschilder der wenigstens zwei vorgesehenen Elektromotoren einstückig miteinander verbunden. Besonders bevorzugt bilden diese Motorschilder gleichzeitig das Elektronikgehäuse und den Stecker. In einer weiteren bevorzugten Ausführungsform beinhalten die Motorschilder Metallteile, an welchen die Statoreinheiten der Elektromotoren befestigt sind. Auf diese Weise wird erreicht, dass zwischen der Statoreinheit und den Motorschildern keine lösbare und damit auch keine abzudichtende Verbindungsstelle vorhanden ist. Damit kann sowohl der Herstellungsaufwand reduziert als auch die Zuverlässigkeit der gesamten Vorrichtung erhöht werden, da weniger abzudichtende oder in sonstiger Weise zu schützende Einrichtungen vorhanden sind.

Ferner kann durch die Anordnung der Statoreinheiten an den Motorschildern eine besonders feste Verbindung zwischen den einzelnen Statoreinheiten geschaffen werden.

In einer weiteren bevorzugten Ausführungsform sind an den Motorschildern Sensoreinrichtungen angeordnet. Durch die Anordnung der Sensoreinrichtungen an den Motorschildern wird erreicht, dass eine genaue Ausrichtung der Sensoreinrichtung zu den ebenfalls an den Motorschildern angeordneten Statoreinheiten gewährleistet wird. Die Sensoreinrichtungen sind bevorzugt dafür vorgesehen, die Temperatur der Vorrichtung zu messen oder auch zur Messung der Lage des Rotors gegenüber dem Stator. Auch andere Sensoren, wie beispielsweise Feuchtigkeitssensoren und dergleichen, können zur Anwendung kommen.

In einer weiteren bevorzugten Ausführungsform steuert die Steuerungseinrichtung mehr als zwei Elektromotoren an. Dabei können die weiteren Elektromotoren in dem gleichen Gehäuse oder auch in einem separaten Gehäuse oder mehreren separaten Gehäusen angeordnet sein. Falls die zusätzlichen Motoren in einem weiteren Gehäuse angeordnet sind, wird bevorzugt eine Verbindung zwischen der Steuerungseinrichtung und dem zweiten Gehäuse vorgesehen. In einer weiteren bevorzugten Ausführungsform können jedoch auch alle Motoren in einem Gehäuse untergebracht werden und die zentrale Steuerungseinrichtung fest mit dem Gehäuse verbunden werden.

Bei einer weiteren bevorzugten Ausführungsform weist das gemeinsame Gehäuse ein Spritzgusselement auf und/oder ist bevorzugt als Spritzgusselement ausgeführt. Durch diese Ausführungsform wird die Stabilität der Vorrichtung erhöht.

Bei einer weiteren bevorzugten Ausführungsform sind die Rotoreinrichtungen fest mit mechanischen Kraftübertragungseinrichtungen verbunden. Bevorzugt sind die Rotoreinrichtungen der Elektromotoren fest mit mechanischen Übertragungselementen, wie zum Beispiel Getrieben, verbunden und bilden somit die Mechanikeinheiten der Vorrichtungen.

Besonders bevorzugt ist in einer dieser Mechanikeinheiten die Lagerung der Rotoreinrichtung und der mechanischen Übertragungselemente (Getriebeteile) zusammengefasst, um auf diese Weise Bauteile und Bauraum einzusparen. Bei dieser bevorzugten Ausführungsform gehören die Statoreinheiten zur Elektronikeinheit und die Rotoreinrichtungen zur Mechanikeinheit bzw. den Mechanikeinheiten. Die auftretenden abgedichteten Schnittstellen zwischen der Elektronikeinheit und den mindestens zwei Mechanikeinheiten gehen dabei durch die Elektromotoren.

Die Erfindung ist ferner auf die Verwendung einer erfindungsgemäßen Betätigungsvorrichtung zum Betätigen einer Komponente gerichtet, welche aus einer Gruppe von Komponenten ausgewählt ist, welche Getriebesysteme, Nockenwellenverstellsysteme und dergleichen enthält.

Die Erfindung ist ferner auf ein Verfahren zur Herstellung einer Betätigungsvorrichtung für Komponenten eines Kraftfahrzeugs gerichtet, wobei in einem Schritt jeweils wenigstens eine Komponente wenigstens zweier Elektromotoren mit einer Steuerungseinrichtung zu einer Baugruppe verbunden wird, und in einem weiteren Verfahrensschritt die Baugruppe mit einem Kunststoff oder dergleichen umspritzt wird.

Durch genanntes Umspritzen entsteht um die Baugruppe ein Gehäuse, innerhalb welchem die einzelnen Komponenten der Baugruppe fest zueinander angeordnet sind.

Bevorzugt wird die Komponente der Elektromotoren über eine Verbindungseinrichtung mit der Steuerungseinrichtung verbunden. Dies bedeutet, dass zwischen den Elektromotoren bzw. der Steuerungseinrichtung eine Verbindungseinrichtung bzw. ein Adapter-Verbindungsteil angeordnet ist, welches die mechanische und/oder elektrische Verbindung herstellt.

Bevorzugt handelt es sich bei der Komponente der Elektromotoren, die mit der Steuerungseinrichtung verbunden ist, um eine Statoreinheit.

Auf diese Weise kann das oben erwähnte Elektronikteil der gesamten Vorrichtung zum Betätigen zur Verfügung gestellt werden.

Bevorzugt wird auch wenigstens eine Sensoreinrichtung und/oder wenigstens eine Steckeinrichtung mit der Steuerungseinrichtung verbunden. Dabei werden die Statoreinheiten, die Sensoreinrichtungen und die Steckeinrichtungen über das Adapter-Verbindungsteil mit der Steuerungseinrichtung verbunden. Bevorzugt werden sämtliche der genannten Komponenten, welche die gesamte Baugruppe bilden, anschließend umspritzt und/oder vergossen.

Weitere Vorteile und Ausführungsformen der vorliegenden Erfindung ergeben sich aus den beiliegenden Figuren.

### Darin zeigen:

- Fig. 1: eine Betätigungsvorrichtung nach dem Stand der Technik;
- Fig. 2: eine erfindungsgemäße Betätigungsvorrichtung;
- Fig. 2a: eine erfindungsgemäße Betätigungsvorrichtung in einer weiteren Ausführungsform
- Fig. 3: eine Leistungseinrichtung; und
- Fig. 4: eine Leistungseinrichtung mit aufgebrachter Logikeinrichtung.

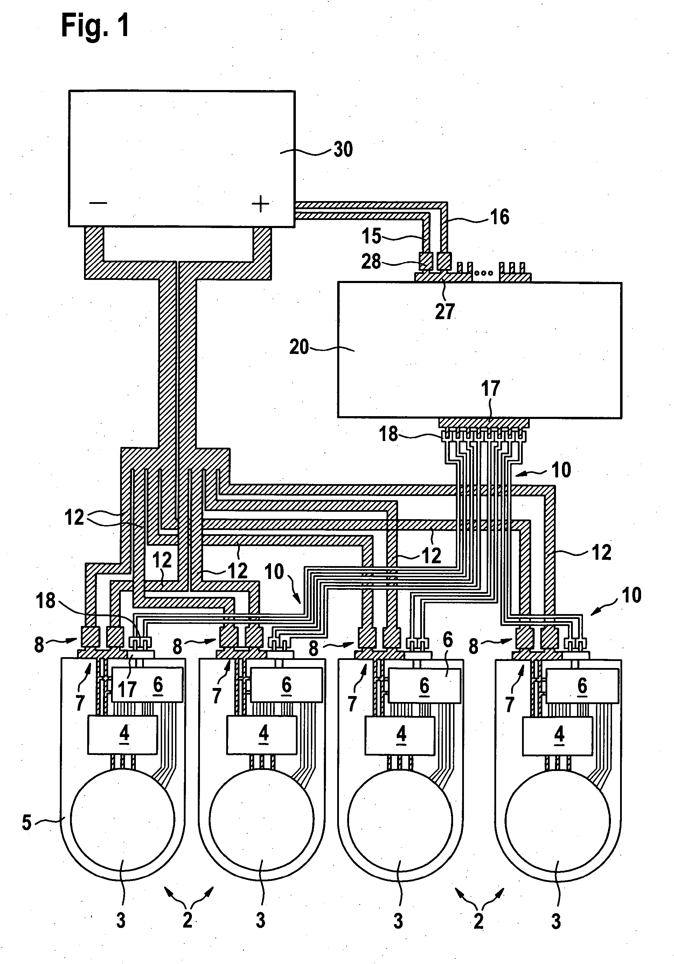

Fig. 1 zeigt eine Betätigungsvorrichtung nach dem Stand der Technik. Diese weist vier Elektromotoreinheiten 2 auf, welche jeweils Elektromotoren 3 aufweisen. Die Elektromotoreinheiten 2 weisen jeweils ein Gehäuse 5 auf, in dem jeweils neben den Motoren 3, Leistungseinrichtungen 4 sowie Logikeinrichtungen 6 untergebracht sind. Die Leistungseinrichtungen 4 bilden zusammen mit den Ansteuerungseinrichtungen 6 die Leistungseinrichtungen zur Betätigung der Motoren 3.

Die jeweiligen Gehäuse 5 weisen erste Verbindungseinrichtungen 7 auf, in welche erste Steckkupplungsteile 8 eingreifen. Über diese Verbindungseinrichtung 7 und die Steckkupplungsteile 8 wird jeweils die Stromversorgung von einer Batterie 30 zugeführt. Daneben weist jedes einzelne Gehäuse 5 eine zweite Verbindungseinrichtung 17 auf, in welche ein zweites Steckkupplungsteil 18 eingreift.

Dieses zweite Verbindungsteil 17 und das zweite Steckkupplungsteil 18 dienen zur Zuführung von Busleitungen 10, über welche die Leistungseinrichtungen 4 sowie die Logikeinrichtungen 6 mit der Systemlogikeinrichtung 20 verbunden sind. Man erkennt, dass auf diese Weise eine Vielzahl von Leitungen und damit auch von Verbindungen bzw. Kontaktsteckern nötig sind. Wie eingangs erwähnt, stellen diese Kontaktverbindungen eine Fehlerquelle innerhalb der Betätigungsvorrichtung dar, insbesondere, wenn man berücksichtigt, dass die Betätigungsvorrichtung permanent Erschütterungen ausgesetzt ist.

Auch mit den Logikeinrichtungen sind die Busleitungen 10 über Verbindungseinrichtungen 27 und Steckkupplungsteile 28 verbunden, was eine weitere Fehlerquelle für das Gesamtsystem darstellt. Der Logikeinrichtung wird die Batteriespannung für die Zuführleitungen 15 und 16 zugeführt.

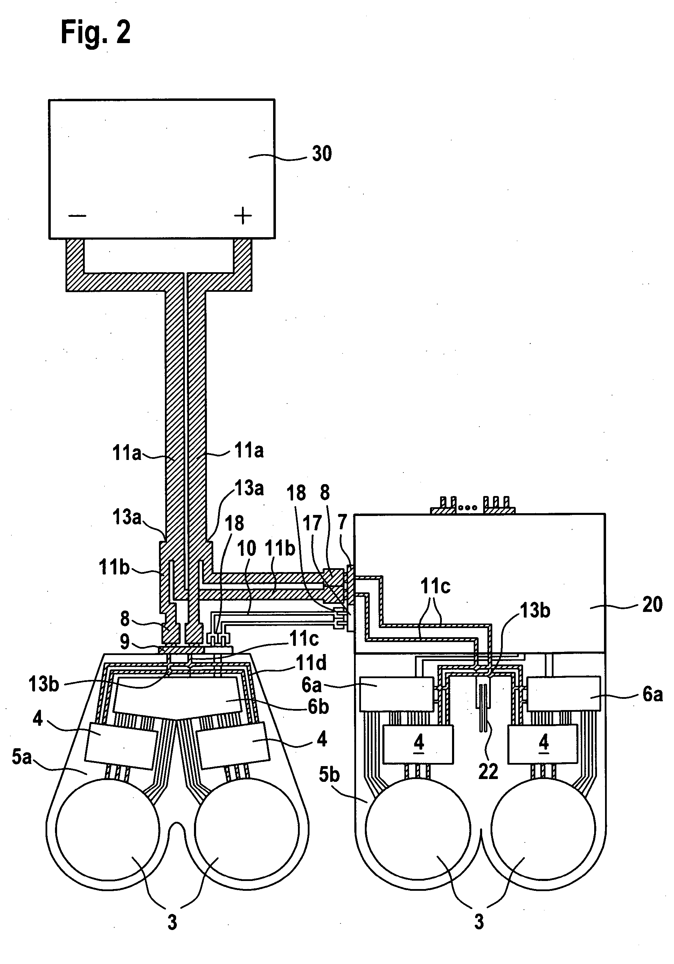

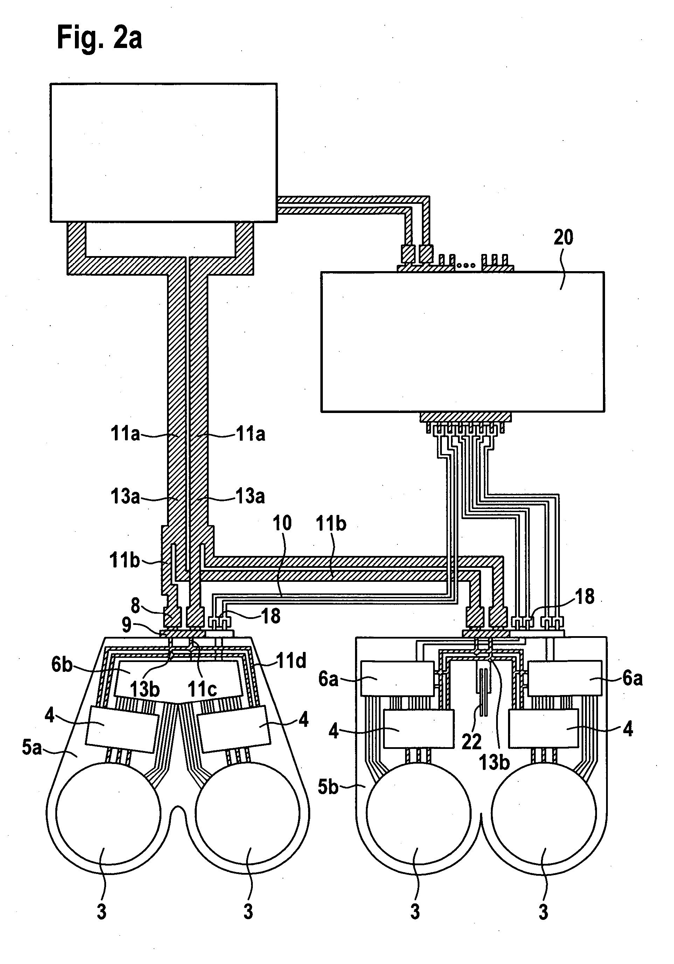

Fig. 2 zeigt eine Vorrichtung zur Betätigung von Komponenten gemäß der vorliegenden Erfindung. Diese Vorrichtung weist ebenfalls vier Elektromotoren 3 auf, welche in zwei Gehäusen 5a und 5b untergebracht sind. Die Erfindung ist selbstverständlich nicht auf die Verwendung von vier Motoren begrenzt. Auch kann die Anzahl der Gehäuse von zwei abweichen. In dem Gehäuse 5a ist neben den Motoren 3 noch die Leistungseinrichtung untergebracht, welche sich aus zwei Leistungseinrichtungen 4 und einer gemeinsamen Logikeinrichtung für die beiden Motoren 3 zusammensetzt. Die Leistungseinrichtungen sind in dieser Ausführungsform im Wesentlichen gleichartig aufgebaut.

In dem Gehäuse 5b sind zwei weitere Motoren 3 untergebracht sowie auch hier die Steuerungseinrichtungen, welche sich aus zwei separaten Leistungseinrichtungen 4 und zwei separaten Logikeinrichtungen 6 zusammensetzen. Auch in dieser Ausführungsform wäre es möglich, anstelle der zwei Ansteuerungseinrichtungen nur eine Ansteuerungseinrichtung vorzusehen. Das Gehäuse 5b weist ferner eine Systemlogikeinrichtung 20 auf.

Das Bezugszeichen 22 bezieht sich auf einen Kondensator, der zum Ausgleich eventuell auftretender Spannungsschwankungen der von der Batterie kommenden Spannung vorgesehen ist. Auch in dem Gehäuse 5a kann ein derartiger Kondensator angeordnet werden.

Ausgehend von der Batterie 30 wird über Stromzuführungsleitungen 11a den jeweiligen Motoren und Leistungs- und Logikeinrichtungen sowie der Systemlogikeinrichtung 20 Spannung bzw. Strom zugeführt. Die Bezugszeichen 13a kennzeichnen erste Leitungsknotenpunkte, mittels derer die Spannung in die beiden Gehäuse 5a und 5b bzw. zu den in diesen Gehäusen angeordneten Einrichtungen geleitet wird. Das Bezugszeichen 8 kennzeichnet auch hier ein erstes Steckkupplungsteil, über welches den in dem Gehäuse 5a bzw. 5b angeordneten Einrichtungen Strom zugeführt wird. Das Bezugszeichen 7 kennzeichnet eine erste Verbindungseinrichtung.

Die Bezugszeichen 11 b kennzeichnen erste Weiterführungsleitungen, mit welchen die Batteriespannung auf die jeweiligen Gehäuse übertragen wird. Innerhalb der Gehäuse sind zweite Leitungsknotenpunkte 13b vorgesehen, welche dazu dienen, die Batteriespannung einerseits auf die Leistungseinrichtungen 4 und andererseits auf die Ansteuereinrichtungen 6 aufzuteilen. In diesem Fall sind jedoch keine Steckverbindungen vorgesehen, sondern einfache, beispielsweise gelötete oder geklebte, Knotenpunkte, die infolgedessen weniger anfällig gegenüber Erschütterungen sind. Daher kann die Stromversorgung in diesem Ausführungsbeispiel über lediglich vier Steckkontakte erfolgen, wohingegen im Fall der in Fig. 1 gezeigten Ausführungsform 16 Steckkontakte nötig sind. Durch die Verwendung einer in das Gehäuse 5b integrierten Logikeinrichtung können zwei Steckkontakte eingespart werden, da die Stromzuführung an die Logikeinrichtung 6b und die Leistungseinrichtung 4 gemeinsam erfolgen kann.

Über die zweite Verbindungseinrichtung 17 und das zweite Steckkupplungsteil 18 wird eine Verbindung zwischen der Systemlogikeinrichtung 20 und den in dem Gehäuse 5a angeordneten Motoren 3 bzw. deren Leistungseinrichtungen 4, ermöglicht. Man erkennt, dass - abgesehen von den jeweiligen Stromzuführungen - dies in diesem Ausführungsbeispiel die einzige Verbindung ist, die über Steckverbindungen und Kabel zustande kommt. Auf diese Weise kann gegenüber der Ausführungsform aus dem Stand der Technik eine erhebliche Einsparung an Steckverbindungen und entsprechenden Kabeln erreicht werden.

Bei der in Fig. 1 gezeigten Ausführungsform sind 16 Steckkontakte nötig, um die Verbindung zwischen den Logikeinrichtungen und den Leistungseinrichtungen zu erreichen, bei der erfindungsgemäßen Ausführungsform hingegen nur vier.

Dabei wird allein durch das Vorsehen einer integrierten Systemlogikeinrichtung eine Einsparung von wenigstens vier Steckeinrichtungen 17, 18 erreicht, welche durch zuverlässigere Verbindungen im Inneren des Gehäuses ersetzt werden.

In einer weiteren (nicht gezeigten) Ausführungsform wird ein gemeinsames Gehäuse 5 für alle Motoren, Leistungseinrichtungen und die Logikeinrichtung vorgesehen, durch welches auch auf die Verwendung der in Fig. 1 gezeigten Busleitung 10 verzichtet werden kann.

In den Gehäusen 5a und 5b ist ferner fest die jeweilige Statoreinheit für die Motoren 3 integriert, was in Fig. 2 nicht im Detail gezeigt ist. Durch die gezeigte Ausführungsform entfallen gegenüber den Systemen aus dem Stand der Technik Stecker, Kabel, Lager und Dichtungen zwischen den Statoreinheiten und der Elektronik. Die Kosten des Systems können auf diese Weise erheblich gesenkt werden.

Das (nicht gezeigte) Adapter-Verbindungsteil ersetzt zusätzliche Verbindungselemente zwischen den Sensormodulen, den Statorwicklungsenden, den Steckern, den Komponenten des Eingangsfilters und der Steuerungseinrichtung. Dies ist in der Herstellung kostengünstiger als die Summe der ersetzten Teile. Daneben kann durch das Adapter-Verbindungsteil eine spezifische Anpassung an vorgegebene Bauräume erfolgen, wobei ermöglicht wird, dass hochwertige Komponenten wie die Statoreinheiten und die Steuerungseinrichtung unverändert eingesetzt werden.

Anstelle der im Inneren vorliegenden gelöteten oder geklebten Verbindungsstellen können auch einfache Gehäuse und Stecker für die einzelnen Motoren verwendet werden. Daneben können zur Verbindung der einzelnen Komponenten auch einfache Kabel, jedoch ohne Steckverbindungen (beispielsweise mit gelöteten Enden), verwendet werden. Auch ist es möglich, innerhalb des Gehäuses Steckverbindungen, insbesondere Schneidklemmen, vorzusehen und diese gleichwohl zur Erhöhung der Stabilität mit einem Kunststoff zu umspritzen oder zu umgießen.

Fig. 2a zeigt eine weitere Ausführungsform der vorliegenden Erfindung. Im Gegensatz zu der in Fig. 2 gezeigten Ausführungsform ist hier die Systemlogikeinrichtung getrennt von den Gehäusen 5 angeordnet. Bei dieser Ausführungsform sind Steckverbindungen zwischen den beiden Gehäusen 5a und 5b und der Systemlogikeinrichtung 20 vorgesehen.

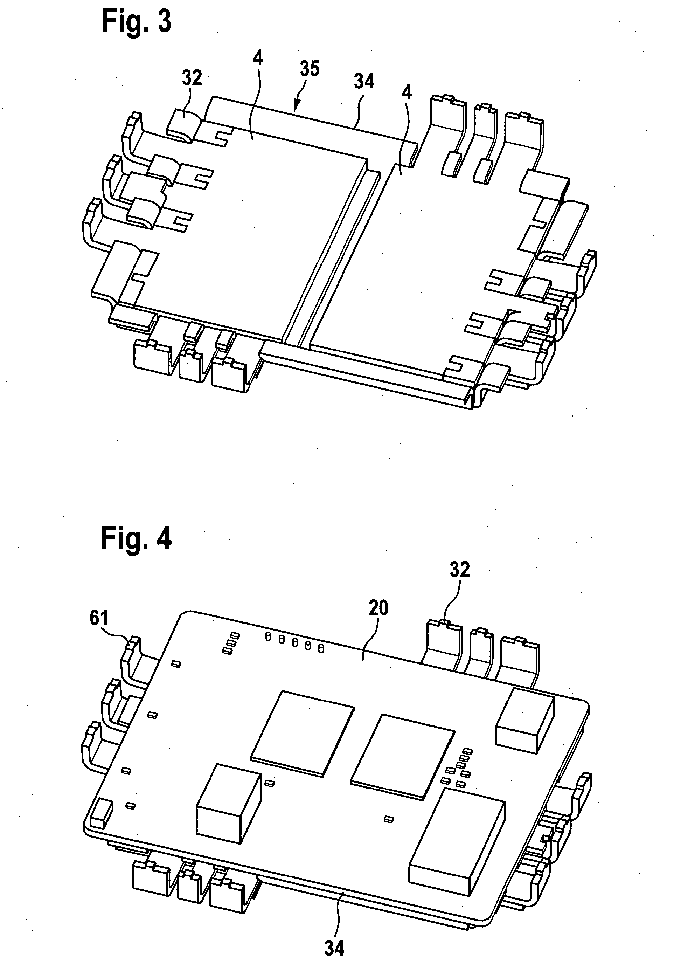

In Fig. 3 ist eine Leistungseinrichtung dargestellt, bei der die Logikeinrichtung noch nicht montiert wurde. Man erkennt zwei Leistungseinrichtungen 4, welche über eine Vielzahl von Kontakten 32 geschaltet werden können. Das Bezugszeichen 34 bezeichnet den Rand einer wannenförmigen Kühleinrichtung 35. Diese Kühleinrichtung 35 weist einen flächigen Kontakt zu den Leistungseinrichtungen 4 auf, wodurch eine besonders effiziente Abführung der entstehenden Wärme erreicht wird.

Daneben weist die Kühleinrichtung 35 auch einen direkten Kontakt zu denjenigen Kontakten der Leistungseinrichtungen auf, die mit den Wicklungen der Elektromotoren verbunden sind.
In diesen Kontakten entsteht die größte Wärme. Durch die Wärmeableitung an den Kontakten wird auch bei hohen Wicklungstemperaturen eine Erwärmung der Leistungseinrichtung durch einen vom Wärmewiderstand der Leitung begrenzten Wärmefluss aus der Wicklung verhindert.

Fig. 4 zeigt die Steuerungseinrichtung, auf welche die Logikeinrichtung 20 montiert wurde. Die Kühleinrichtung weist auch über ihre Ränder 34 direkte Kontakte zu den wärmeleitenden Elementen der Logikeinrichtung 20 auf. Man erkennt, dass die gesamte Baugruppe, das heißt die Gesamtzusammensetzung aus Leistungseinrichtung und Logikeinrichtung 20, als sehr flaches Element ausgeführt ist, welches sehr Platz sparend in den einzelnen Motorgehäusen integriert werden kann. Dabei sind die Schnittstellen zwischen der Leistungseinrichtung und der Logikeinrichtung 20 durch flächige Kontaktstellen bewerkstelligt, die mit Leitklebstoff oder Lot realisiert werden.

Vorzugsweise werden die Leiterbahnen zwischen den Bauelementen der Leistungseinrichtung und der Logikeinrichtung direkt auf oder in Kunststoffkörpern realisiert, wobei die Kunststoffkörper in der Leistungseinrichtung die Positionierung der Bauelemente, die Isolation zwischen unterschiedlichen Potentialen und die thermische Trennung zwischen Leistungs- und Logikteil gewährleisten.

### Bezugszeichenliste

- 2: Elektromotoreinheit
- 3: Elektromotor
- 4: Endstufe/Leistungseinrichtungen
- 5: Gehäuse
- 5a: Gehäuse
- 5b: Gehäuse
- 6: Logikeinrichtung/Ansteuerungseinrichtung
- 7: erste Verbindungseinrichtung
- 8: erstes Steckkupplungsteil
- 10: Busleitungen
- 11a: erste Stromzuführungsleitung
- 11 b: erste Weiterführungsleitung
- 11 c: zweite Weiterführungsleitung
- 11 d: dritte Weiterführungsleitung
- 12: zweite Stromzuführungsleitung
- 13a: erster Leitungsknotenpunkt
- 13b: zweiter Leitungsknotenpunkt
- 15: Stromzuführungsleitung/Zuführleitungen
- 16: Stromzuführungsleitung/Zuführleitungen
- 17: zweite Verbindungseinrichtung
- 18: zweites Steckkupplungsteil
- 20: Systemlogikeinrichtung
- 22: Kondensator
- 27: Verbindungseinrichtung
- 28: Steckkupplungsteil
- 30: Batterie
- 32: Kontakt
- 34: Rand der Kühleinrichtung
- 35: Kühleinrichtung

## Patentansprüche

1. Vorrichtung zum Betätigen von Komponenten eines Kraftfahrzeugs mit wenigstens zwei Elektromotoren (3), welche jeweils wenigstens eine Statoreinheit und eine Rotoreinheit aufweisen, einer Steuerungseinrichtung (4, 6) für die Elektromotoren (3), welche wenigstens eine Logikeinrichtung (6) und eine Leistungseinrichtung (4) aufweist, wobei die Steuerungseinrichtung (4, 6) fest mit wenigstens einer Komponente der Elektromotoren (3) verbunden ist.

2. Vorrichtung nach Anspruch 1, **dadurch gekennzeichnet, dass** die Steuerungseinrichtung (4, 6) und wenigstens zwei Elektromotoren (3) in einem gemeinsamen Gehäuse (5) untergebracht sind.

3. Vorrichtung nach wenigstens einem der vorangegangenen Ansprüche, **dadurch gekennzeichnet, dass** ferner eine Systemlogikeinrichtung (20) vorgesehen ist, die fest mit wenigstens einer Komponente der Elektromotoren (3) verbunden ist.

4. Vorrichtung nach wenigstens einem der vorangegangenen Ansprüche, **dadurch gekennzeichnet, dass** die Steuerungseinrichtung (4, 6) fest mit der Statoreinheit wenigstens eines Elektromotors (3), bevorzugt fest mit den Statoreinheiten beider Elektromotoren verbunden ist.

5. Vorrichtung nach wenigstens einem der vorangegangenen Ansprüche, **dadurch gekennzeichnet, dass** die Steuerungseinrichtung (4, 6) für jeden Elektromotor (3) wenigstens eine Leistungseinrichtung (4) aufweist.

6. Vorrichtung nach wenigstens einem der vorangegangenen Ansprüche, **dadurch gekennzeichnet, dass** die Leistungseinrichtungen (4) im Wesentlichen baugleich ausgeführt sind.

7. Vorrichtung nach wenigstens einem der vorangegangenen Ansprüche, **dadurch gekennzeichnet, dass** die Steuerungseinrichtungen (4, 6) in Kontakt mit der Systemlogikeinrichtung (20) stehen.

8. Vorrichtung nach wenigstens einem der vorangegangenen Ansprüche, **dadurch gekennzeichnet, dass** die Kontaktierung zwischen den Steuerungseinrichtungen (4, 6) und der Systemlogikeinrichtung (20) über flächige Kontaktstellen erfolgt.

9. Vorrichtung nach wenigstens einem der vorangegangenen Ansprüche, **dadurch gekennzeichnet, dass** die Systemlogikeinrichtung (20) und die Steuerungseinrichtungen (4, 6) auf einer gemeinsamen Kühleinrichtung (35) angeordnet sind.

10. Vorrichtung nach wenigstens einem der vorangegangenen Ansprüche, **dadurch gekennzeichnet, dass** die Kühleinrichtung (35) in direktem Kontakt mit wärmeleitenden Elementen der Systemlogikeinrichtung (20) steht.

11. Vorrichtung nach wenigstens einem der vorangegangenen Ansprüche, **dadurch gekennzeichnet, dass** die Systemlogikeinrichtung (20) eine flache Gestalt aufweist.

12. Vorrichtung nach wenigstens einem der vorangegangenen Ansprüche, **dadurch gekennzeichnet, dass** die Kühleinrichtung (35) flächige Kontakten zu den Steuerungseinrichtungen (4, 6) aufweist.

13. Vorrichtung nach wenigstens einem der vorangegangenen Ansprüche, **dadurch gekennzeichnet, dass** die Steuerungseinrichtung (4, 6) und die Systemlogikeinrichtung (20) mit den Elektromotoren (3) über eine Verbindungseinrichtung verbunden sind.

14. Vorrichtung nach wenigstens einem der vorangegangenen Ansprüche, **dadurch gekennzeichnet, dass** die Verbindungseinrichtung ein Motorschild pro Elektromotor aufweist.

15. Vorrichtung nach wenigstens einem der vorangegangenen Ansprüche, **dadurch gekennzeichnet, dass** die Motorschilder einstückig miteinander verbunden sind.

16. Vorrichtung nach wenigstens einem der vorangegangenen Ansprüche, **dadurch gekennzeichnet, dass** an den Motorschildern die Statoreinheiten der Elektromotoren angeordnet sind.

17. Vorrichtung nach wenigstens einem der vorangegangenen Ansprüche, **dadurch gekennzeichnet, dass** an den Motorschildern Sensoreinrichtungen angeordnet sind.

18. Vorrichtung nach wenigstens einem der vorangegangenen Ansprüche, **dadurch gekennzeichnet, dass** die Steuerungseinrichtung (4, 6) mehr als zwei Elektromotoren (3) ansteuert.

19. Vorrichtung nach wenigstens einem der vorangegangenen Ansprüche, **dadurch gekennzeichnet, dass** das gemeinsame Gehäuse (5) ein Spritzgusselement aufweist und bevorzugt aus einem Spritzgusselement besteht.

20. Vorrichtung nach wenigstens einem der vorangegangenen Ansprüche, **dadurch gekennzeichnet, dass** die Rotoreinrichtungen fest mit mechanischen Kraftübertragungseinrichtungen verbunden sind.

21. Verwendung einer Betätigungsvorrichtung nach wenigstens einem der vorangegangenen Ansprüche zum Betätigen einer Komponente, welche aus einer Gruppe von Komponenten ausgewählt ist, welche Getriebesysteme, Nockenwellenverstellsysteme und dergleichen enthält.

22. Verfahren zur Herstellung einer Betätigungsvorrichtung für Komponenten eines Kraftfahrzeugs mit den Schritten:
- Verbinden jeweils wenigstens einer Komponente wenigstens zweier Elektromotoren mit einer Steuerungseinrichtung zu einer Baugruppe;
- Umspritzen und/oder Umgießen der Baugruppe mit einem Kunststoff.

23. Verfahren nach Anspruch 22, **dadurch gekennzeichnet, dass** die Komponente der Elektromotoren über eine Verbindungseinrichtung mit der Steuerungseinrichtung verbunden wird.

24. Verfahren nach wenigstens einem der vorangegangenen Ansprüche, **dadurch gekennzeichnet, dass** die Komponente der Elektromotoren (3) eine Statoreinheit ist.

25. Verfahren nach wenigstens einem der vorangegangenen Ansprüche, **dadurch gekennzeichnet, dass** wenigstens eine Sensoreinrichtung und/oder wenigstens eine Steckeinrichtung mit der Steuerungseinrichtung (4, 6) verbunden wird.
